## Europäisches Patentamt

(19) ))) **European Patent Office**

**Office européen des brevets**

(11) Veröffentlichungsnummer: **0 238 718**
**B1**

(12) **EUROPÄISCHE PATENTSCHRIFT**

(45) Veröffentlichungstag der Patentschrift:
**18.04.90**

(51) Int. Cl.⁴: **B25F 3/00**, B23B 45/02

(21) Anmeldenummer: **86116341.8**

(22) Anmeldetag: **25.11.86**

(54) **Elektrowerkzeug mit netzunabhängiger Stromversorgung.**

(30) Priorität: **26.03.86 DE 3610221**

(43) Veröffentlichungstag der Anmeldung:
**30.09.87 Patentblatt 87/40**

(45) Bekanntmachung des Hinweises auf die Patenterteilung:
**18.04.90 Patentblatt 90/16**

(84) Benannte Vertragsstaaten:
**CH DE FR GB IT LI NL SE**

(56) Entgegenhaltungen:
**DE-A- 3 115 280**
**FR-A- 2 302 164**

(73) Patentinhaber: **C. & E. FEIN GmbH & Co.,**
**Leuschnerstrasse 41-47, D-7000 Stuttgart 1(DE)**

(72) Erfinder: **Schreiber, Wolfgang, Treiberstrasse 21,**
**D-7000 Stuttgart 75(DE)**
Erfinder: **Hald, Ewald, Haldenstrasse 22,**
**D-7024 Filderstadt 1(DE)**
Erfinder: **Ludwig, Manfred, Lindpaintnerstrasse 83,**
**D-7000 Stuttgart 1(DE)**
Erfinder: **Fink, Manfred, Hofäckerstrasse 5,**
**D-7101 Eberstadt(DE)**
Erfinder:
Erfinder:
Die weiteren Erfinder haben auf ihre Nennung verzichtet

ACTORUM AG

## Beschreibung

Die Erfindung betrifft ein Elektrowerkzeug mit einer netzunabhängigen Stromversorgung, wobei das Elektrowerkzeug ein Getriebe- bzw. ein Motorgehäuse aufweist, das gleichzeitig als Handgriff ausgebildet ist, und an den sich seitlich ein weiterer Handgriff anschließt.

Derartige Elektrowerkzeuge sind bekannt und werden oft auch Akku-Geräte genannt. Bei diesen Akku-Geräten ist am Ende eines Handgriffs eine Kupplungseinrichtung vorgesehen, an die man einen wiederaufladbaren Akku-Pack stecken kann (EP-A 71 356). Gelegentlich, insbesondere bei Stabgeräten, werden Akkus in den Handgriff gesteckt oder eingelegt (DE-A 24 41 047).

Das relativ hohe Gewicht der Akku-Packs, die oft mehr wiegen als Getriebe und Motor, trägt bei diesen Geräten dazu bei, daß der Schwerpunkt der Maschinen in der Nähe des Akku-Packs liegt. Das wirkt sich bei der Handhabbarkeit der Akku-Geräte sehr nachteilig aus. Bei den akku-lastigen Stabgeräten ist nur eine senkrechte Handhabung empfehlenswert, z.B. für die Bandmontage.

Dagegen sind pistolenförmige Akku-Geräte z. B. für senkrechte Montagearbeiten ungeeignet, da der am Ende des Handgriffs angebrachte Akku-Pack dazu beiträgt, daß der Schwerpunkt des Gerätes weit außerhalb der Antriebsachse liegt.

Aufgabe der vorliegenden Erfindung war es deshalb, ein Akku-Gerät zur Verfügung zu stellen, bei dem der Schwerpunkt der Maschine so angeordnet ist, daß das Akku-Gerät in möglichst vielen Arbeitslagen gut handhabbar ist.

Das wird durch die im kennzeichnenden Teil des Hauptanspruchs beschriebene Anordnung erreicht. Mit dieser Anordnung ist gewährleistet, daß das Akku-Gerät wie ein Stabgerät, ohne Akku-Pack am Pisolengriff oder wie ein Pistolen-Gerät gehandhabt werden kann. Diese Anordnung bietet nicht nur den oben beschriebenen ergonomischen Vorteil, sondern auch die Möglichkeit, daß die Arbeit nicht unterbrochen werden muß, wenn ein Akku-Pack leer ist. Durch Umlegen eines Umschalters wird dann das Gerät durch den noch vollen Akku versorgt. Damit der Bedienende weiß, wann ein Akku-Pack leer ist, ist eine Ladungsanzeige vorteilhaft. Mit dieser doppelten Akku-Anordnung kann das Akku-Gerät auch zeitlich doppelt solange betrieben werden wie bei herkömmlichen Geräten.

Um den Bedienungskomfort zu erhöhen, ist es denkbar den Umschalter durch einen Schaltkreis zu ersetzen, der immer den Akku-Pack zum Antrieb auswählt, der den höchsten Ladezustand aufweist. Ist dann ein Akku-Pack leer, wird selbständig auf den noch vollen umgeschaltet. Am leeren Akku-Pack wird dann der Leer-Zustand angezeigt.

Durch die Ausgestaltung nach Anspruch 5 wird erreicht, daß die Akku-Packs sehr leicht ausgetauscht werden können und beim Aufstecken und Abziehen nicht verkanten. Gleichzeitig sorgt die Hinterschneidung an den Schienen für einen sicheren Halt, so daß die Kontakte zwischen Akku-Pack und Handgriff in einem festen Verhältnis zueinander stehen. Erst durch diese relativ flache Koppelung zwischen Akku-Pack und Handgriff ist es möglich, platzsparend die Akku-Packs wahlweise auf den Pistolen- oder Stabhandgriff zu stecken.

Die Anordnung der Kontakte, an einer Längsseite der Schienen, erleichtert die Montage der Kontakte, da beide Kontakte gleichzeitig auf die Trägerplatte montiert werden können. Das gilt sowohl für die Kontakte auf dem Akku-Pack als auch für die Kontakte auf dem Handgriffende.

Um zu vermeiden, daß beim Ablegen des Akku-Packs auf leitendem Material die Akkus sich unbeabsichtigt entladen, ist vorgesehen, Kontakte unterschiedlich weit aus den Schienen ragen zu lassen. Damit ist beim Aufliegen auf einer ebenen Fläche nur ein Kontakt mit der Fläche in Berührung.

Bettet man die Kontakte in die Schienen ein, so ist auch auf diese Weise ein Schutz vor unbeabsichtigtem Entladen erreicht. Diese Anordnung ist zwar etwas aufwendiger als die vorhergehende aber dafür sicherer.

Damit der Akku-Pack sich vom Handgriff nicht lösen kann, ist eine Verriegelung vorgesehen. Diese Verriegelung besteht in vorteilhafter Weise aus einer auf der Trägerplatte des Akku-Packs befestigten Zunge, die eine Nase aufweist. Diese Nase verhindert im eingerasteten Zustand das unbeabsichtigte Herausfallen des Akku-Packs.

Für den Fall, daß das Akku-Gerät nur mit einem Akku-Pack betrieben wird, ist ein Deckel zur Abdeckung der freigebliebenen Schienen vorgesehen. Dies ist notwendig, um die Schienen vor Verschmutzung oder Beschädigung zu sichern. Dieser Deckel ist auf der einen Seite genauso ausgebildet wie die Trägerplatte des Akku-Packs, auf der anderen Seite ist in vorteilhafter Weise eine Klippvorrichtung vorgesehen, die zur Aufnahme von Werkzeugen dienen kann (z.B. Bohrfutterschlüssel, Schrauberbits, Bohrer, usw.).

Die Erfindung ist anhand von Zeichnungen in Ausführungsbeispielen dargestellt. Es zeigen:

Fig. 1 eine Seitenansicht des erfindungsgemäßen Akku-Geräts;
Fig. 2 einen Schnitt nach der Linie II-II in Fig. 1;
Fig. 3 einen Schnitt nach der Linie III-III in Fig. 2;
Fig. 4 eine Variante nach Fig. 2;
Fig. 5 einen Schnitt nach der Linie V-V in Fig. 2;
Fig. 6 eine Rückansicht eines Deckels.

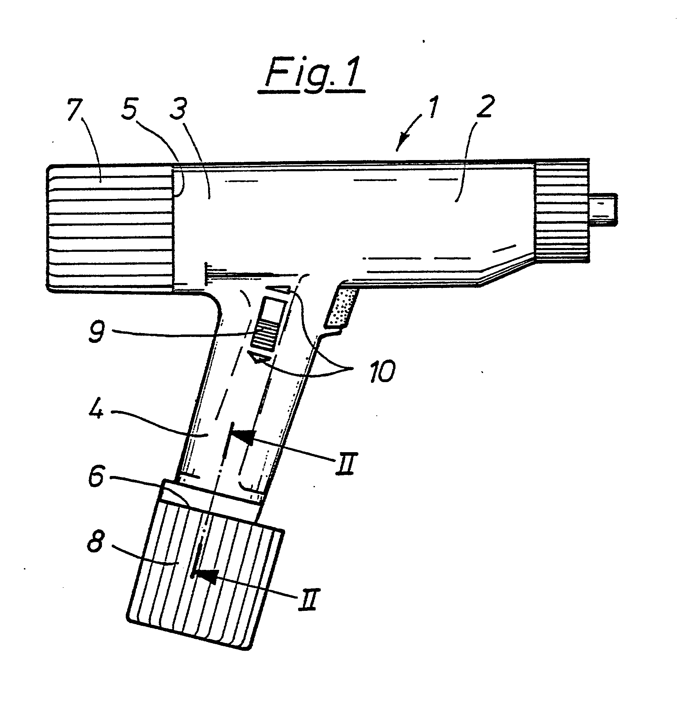

Das in Fig. 1 dargestellte Akku-Gerät 1 stellt einen Schrauber dar. Es weist ein Getriebe- bzw. Motorgehäuse 2 auf, an das sich ein erster Handgriff 3 und ein zweiter, pistolenförmiger Handgriff 4 anschließt. Der erste Handgriff 3 kann in seiner Länge stark variieren, da der Benutzer auch das Getriebe- bzw. Motorgehäuse 2 mit der Hand umfassen kann. An den Enden 5 und 6 der Handgriffe 3 und 4 sind je ein Akku-Pack 7 und 8 befestigt. An der Kreuzungsstelle zwischen den beiden Handgriffen 3 und 4 sitzt der Umschalter 9, mit dem man den jeweiligen Akku zum Antrieb auswählen kann. Die Symbole 10 zeigen dem Benutzer, welcher Akku-Pack, 7 oder 8, zur Stromversorgung ausgewählt wurde.

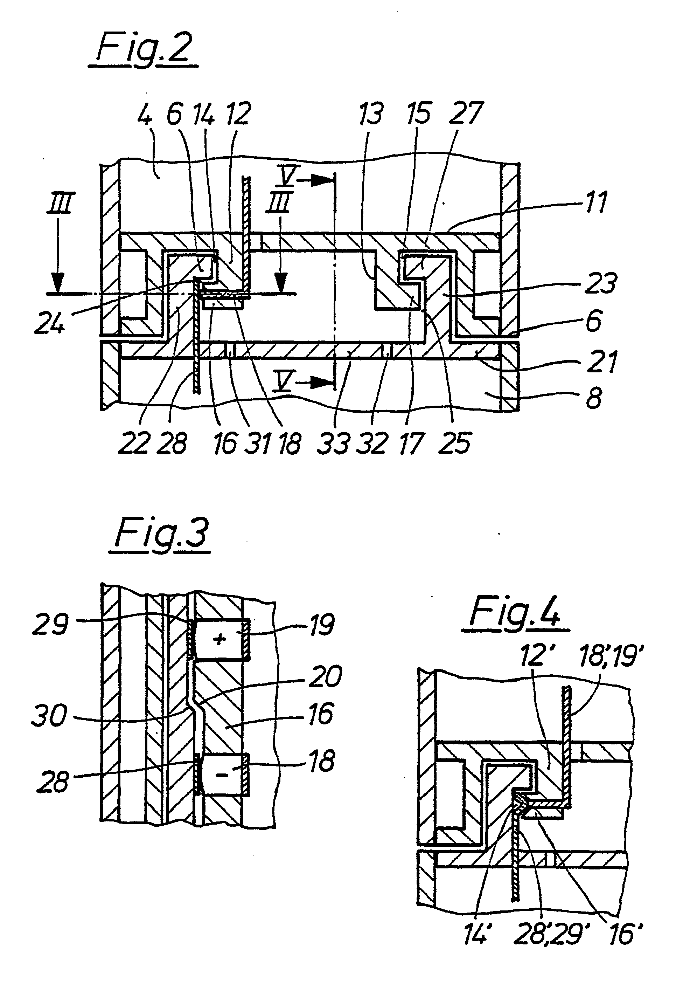

In Fig. 2 ist das Ende 6 des Handgriffs 4 dargestellt, das mit dem Akku-Pack 8 gekoppelt ist. Am Ende 6 ist eine Trägerplatte 11 befestigt, auf der zwei parallele Schienen 12 und 13 zum Akku-Pack 8 hin ausgebildet sind. Die Schienen 12 und 13 sind zu den parallel verlaufenden Rändern des Handgriffs 4 hin mit Hinterschneidungen 14 und 15 versehen. Durch diese Hinterschneidungen 14 und 15 entstehen Kragen 16 und 17. Auf der Stirnseite des Kragens 16 treten die beiden Kontakte 18 und 19 aus. Wie in Fig. 3 besonders gut zu erkennen ist, weist der Kragen 16 nicht überall die gleiche Breite auf. Zwischen den beiden Kontakten 18 und 19 besitzt der Kragen 16 eine Stufe 20. Die Stufe 20 soll verhindern, daß beim Ablegen des Geräts, bei dem ein Akku-Pack abgenommen ist, eine leitende Verbindung zwischen den Kontakten 18 und 19 entsteht.

Die Koppelungsanordnung am Handgriff 4 findet sein entsprechendes Gegenstück am Akku-Pack 8. Hier ist eine Trägerplatte 21 am Rand des Akku-Packs 8 befestigt. Die beiden Schienen 22 und 23 besitzen Hinterschneidungen 24 und 25, so daß Kragen 26 und 27 gebildet werden, die in die Hinterschneidungen 14 und 15 eingreifen können. In der Hinterschneidung 24 sind die Kontakte 28 und 29 eingebettet. Entsprechend der Stufe 20 ist auch in der Hinterschneidung 24 eine Stufe 30 vorgesehen.

In der Variante nach Fig. 4 sind die Kontakte 18' und 19', wie auch in Fig. 2, im Kragen 16' der Schiene 12' angeordnet. Hier ragen jedoch die Kontakte 18' und 19' nicht über den Kragen 16' hinaus, sondern im Kragen 16' eingebettet. Dementsprechend sind in der Hinterschneidung 14' die Kontakte 28' und 29' mit einer geeigneten Wölbung versehen, die es ermöglicht, daß die Kontakte 28' und 29' die vertieft angeordneten Kontakte 18' und 19' berühren. Dadurch entfällt die Notwendigkeit einer Abstufung des Kragens 16'.

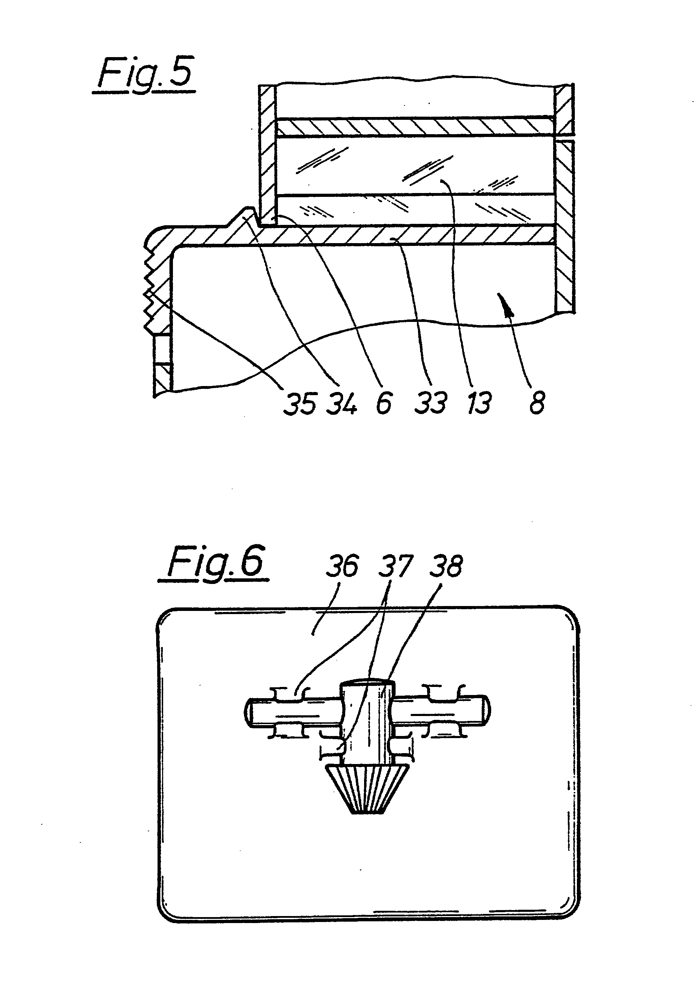

In Fig. 5 ist die Fixierung des Akku-Packs 8 am Handgriffende 6 dargestellt. Die Trägerplatte 21 ist in ihrem Mittelbereich, zwischen und parallel zu den Schienen 22 und 23, zweimal geschlitzt. Diese Schlitze 31 und 32 erstrecken sich von der einen Seite, die zuerst eingeschoben wird, bis nicht ganz zu der anderen Seite des Akku-Packs 8, so daß die Tragerplatte 21 in diesem Bereich eine federnde Zunge 33 bildet. Der Rand des Akku-Packs 8 ist auf der einen Seite soweit über die Trägerplatte 21 gezogen, daß er im eingeschobenen Zustand an den Schienen 12 und 13 anliegt. Die Zunge 33 weist eine Nase 34 auf, die quer zur Ausdehnungsrichtung der Zunge 33 verläuft. Die Nase 34 ist in einem Abstand zu dem an den Schienen 12 und 13 anliegenden Rand angeordnet, daß sie außerhalb des gegenüberliegenden Randes des Handgriffes 4, gegen diesen Rand drückt. Somit ist das Ende 6 des Handgriffs 4 zwischen der Nase 34 und dem Rand des Akku-Packs 8 eingeklemmt. Zum Lösen dieser Klemmung ist am Ende der Zunge 33 eine Griffleiste 35 angewinkelt, an der man die federnde Zunge 33, und damit auch die Nase 34, vom Handgriff 4 wegbewegen und somit die Klemmung lösen kann. Es ist auch denkbar, daß man eine ähnliche Klemmeinrichtung nicht nur an der Trägerplatte 21 sondern in umgekehrter Weise an der Trägerplatte 11 vorsehen kann. Eine weitere Lösung wäre das Anbringen dieser Klemmeinrichtung an den Seitenrändern des Handgriffs 4 oder des Akku-Packs 8.

Der in Fig. 6 dargestellte Deckel 36 besitzt auf seiner Rückseite die gleichen Schienen wie die Trägerplatte 21 des Akku-Packs 8, jedoch ohne Kontakte. Es kann auch eine entsprechende Klemmeinrichtung vorgesehen sein. Dieser Deckel 36 dient zum Abdecken einer nicht durch einen Akku-Pack besetzten Kopplungseinrichtung zum Schutz vor Beschädigung oder Verschmutzung der Kopplungseinrichtung. In vorteilhafter Weise weist der Deckel 36 Klemmstege 37 auf, mit denen ein Werkzeug 38 auf ihm festgeklemmt werden kann. In der Fig. 6 ist ein Bohrfutterschlüssel dargestellt. Es können aber auch genauso gut Schrauber-Bits, Bohrer oder andere Werkzeug befestigt sein.

**Patentansprüche**

1. Elektrowerkzeug mit netzunabhängiger Stromversorgung, wobei das Elektrowerkzeug ein Getriebe- bzw. Motorgehäuse aufweist, das gleichzeitig als Handgriff ausgebildet sein kann und an den sich ein weiterer Handgriff anschließt, dadurch gekennzeichnet, daß an jedem der Enden (5,6) der Handgriffe (3,4) (bzw. Getriebe- und Motorgehäuse (2) und Handgriff (4)) Kopplungsvorrichtungen zum Anstecken von Akku-Packs (7,8) vorgesehen sind.

2. Elektrowerkzeug nach Anspruch 1, **dadurch gekennzeichnet,** daß am Elektrowerkzeug eine Umschalteinrichtung (9) vorgesehen ist, mit der man einen der beiden Akku-Packs (7,8) zur Stromversorgung auswählt.

3. Elektrowerkzeug nach Anspruch 1, dadurch gekennzeichnet, daß ein Schaltkreis vorgesehen ist, der den Akku-Pack (7,8) zur Stromversorgung auswählt, der den höchsten Ladezustand aufweist.

4. Elektrowerkzeug nach den Ansprüchen 1 bis 3, dadurch gekennzeichnet, daß auf den Akku-Packs (7,8) eine Anzeige für den Ladezustand vorgesehen ist.

5. Elektrowerkzeug nach den Ansprüchen 1 bis 4, dadurch gekennzeichnet, daß an den Enden (5,6) der Handgriffe (3,4) Schienen (12,13) mit Hinterschneidungen (14,15) vorgesehen sind, die ihre Entsprechung auf der Stirnseite der Akku-Packs (7,8) haben.

6. Elektrowerkzeug nach Anspruch 5, dadurch gekennzeichnet, daß an der Längsseite einer Schiene (12) Kontakte (18,19) angeordnet sind.

7. Elektrowerkzeug nach Anspruch 6, dadurch gekennzeichnet, daß die Kontakte (18,19) unterschiedlich weit aus der Schiene (12) ragen.

8. Elektrowerkzeug nach Anspruch 6, dadurch gekennzeichnet, daß die Kontakte (18',19') in der Schiene (12') eingebettet sind.

9. Elektrowerkzeug nach den Ansprüchen 1 bis 8, dadurch gekennzeichnet, daß sich parallel zu den Schienen (12,13) eine federnde Zunge (33) auf den Akku-Packs (7,8) befindet, die eine Nase (34) aufweist, die am Ende (5,6) des Handgriffs (3,4) einrasten kann.

10. Elektrowerkzeug nach den Ansprüchen 1 bis 9, dadurch gekennzeichnet, daß ein Deckel (36) mit Schienen, die denen der Akku-Packs (7,8) entsprechen, vorgesehen ist und der auf der den Schienen abgekehrten Seite Klemmstege (37) zur Aufnahme von Werkzeugen (38) aufweist.

## Claims

1. An electric tool with a power supply independent of the mains, the electric tool having a transmission housing or motor housing which can be designed to function simultaneously as a handle [and] which is laterally adjoined by another handle, characterised in that coupling devices are provided at each end (5, 6) of the handles (3, 4) – or the transmission housing and the motor housing (2) and handle (4) – for attaching battery packs (7. 8).

2. An electric tool according to claim 1, characterised in that a two-way switch (9) is provided with which one of the two battery packs (7, 8) is selected for supplying power.

3. An electric tool according to claim 1, characterised in that a circuit is provided which selects, for supplying power, whichever battery pack (7, 8) has the highest charge.

4. An electric tool according to claims 1 to 3, characterised in that an indicator of the state of charge is provided on the battery pack (7, 8).

5. An electric tool according to claims 1 to 4, characterised in that, at the ends (5, 6) of the handles (3, 4), rails (12, 13) with undercuts (14, 15) are provided which have their counterparts on the front face of the battery pack (7, 8).

6. An electric tool according to claim 5, characterised in that contacts (18, 19) are arranged on the longitudinal side of a rail (12).

7. An electric tool according to claim 6, characterised in that the contacts (18, 19) project for different distances out of the rail (12).

8. An electric tool according to claim 6, characterised in that the contacts (18', 19') are embedded in the rail (12').

9. An electric tool according to claims 1 to 8, characterised in that there is a resilient tongue (33) parallel to the rails (12, 13) on the battery pack (7, 8), which tongue has a nose (34) which can snap in at the end (5, 6) of the handle (3, 4).

10. An electric tool according to claims 1 to 9, characterised by the provision of a lid (36) with rails corresponding to those of the battery pack (7, 8) and which has clamping webs (37) on the side facing away from the rails, for accommodating tools (38).

## Revendications

1. Outil électrique à alimentation en courant indépendante du secteur, l'outil électrique présentant un carter respectif de transmission ou de moteur qui peut être simultanément réalisé sous la forme d'une poignée, et auquel se rattache une poignée supplémentaire, caractérisé par le fait que des dispositifs d'accouplement sont prévus, à chacune des extrémités (5, 6) des poignées (3, 4) [respectivement du carter (2) de transmission et de moteur, et de la poignée (4)], en vue de l'enfichage de groupes d'accumulateurs (7, 8).

2. Outil électrique selon la revendication 1, caractérisé par le fait qu'il est prévu, sur l'outil électrique, un dispositif de commutation (9) à l'aide duquel on sélectionne l'un des deux groupes d'accumulateurs (7, 8), en vue de l'alimentation en courant.

3. Outil électrique selon la revendication 1, caractérisé par le fait qu'il est prévu un circuit de commutation qui sélectionne, en vue de l'alimentation en courant, le groupe d'accumulateurs (7, 8) qui présente la condition de charge maximale.

4. Outil électrique selon les revendications 1 à 3, caractérisé par le fait qu'un indicateur de la condition de charge est prévu sur les groupes d'accumulateurs (7, 8).

5. Outil électrique selon les revendications 1 à 4, caractérisé par le fait que des glissières (12, 13), pourvues de contre-dépouilles (14, 15) et prévues aux extrémités (5, 6) des poignées (3, 4), ont leurs homologues à la face extrême des groupes d'accumulateurs (7, 8).

6. Outil électrique selon la revendication 5, caractérisé par le fait que des contacts (18, 19) sont disposés sur le côté longitudinal d'une glissière (12).

7. Outil électrique selon la revendication 6, caractérisé par le fait que les contacts (18, 19) débordent différemment loin au-delà de la glissière (12).

8. Outil électrique selon la revendication 6, caractérisé par le fait que les contacts (18', 19') sont noyés dans la glissière (12').

9. Outil électrique selon les revendications 1 à 8, caractérisé par le fait qu'une languette élastique (33) située sur les groupes d'accumulateurs (7, 8), parallèlement aux glissières (12, 13), comporte un bec (34) qui peut s'encliqueter à l'extrémité (5, 6) de la poignée (3, 4).

10. Outil électrique selon les revendications 1 à 9, caractérisé par le fait qu'il est prévu un couvercle (36) qui est muni de glissières correspondant à celles des groupes d'accumulateurs (7, 8), et qui présente, du côté tourné à l'opposé des glissières, des nervures de serrage (37) pour recevoir des outils (38).

*Fig.1*

EP 0 238 718 B1

Fig.2

Fig.3

Fig.4

_Fig.5_

35 34 6 33 13 8

_Fig.6_ 36 37 38